# DEMANDE DE BREVET EUROPEEN

(11) **EP 4 834 561 A1**
(43) Date de publication de la demande: **04.11.2026**
(21) Numéro de dépôt: 26174849.5
(22) Date de dépôt: 27.04.2026
(51) Int. Cl.: B29C 45/37, B05D 7/00, B25F 5/02, E02F 9/20, H01H 25/04, B05D 1/02, B05D 1/18, B05D 5/02, B29C 45/00, B29K 75/00, B29L 31/30, B29L 31/46, G05G 1/50

(54) **PROCÉDÉ DE FABRICATION D'UN DISPOSITIF DE COMMANDE**

(30) Priorité: 30.04.2025 FR 2504585
(71) Demandeur: Apem, 82300 Caussade (FR)
(72) Inventeur: MORA, Cédric, 82130 L'HONOR DE COS (FR)
(74) Mandataire: Regimbeau

(57) **Abrégé**

La présente invention concerne un procédé de fabrication d'un dispositif de commande comprenant un manche de préhension, ledit procédé comprenant :
• la fabrication d'une coque rigide (10, 20) définissant une partie du manche par injection d'une matière plastique dans un moule (50) formant une empreinte (51), ladite empreinte présentant une texture en creux et/ou en relief sur au moins une partie (52) d'une face interne, de sorte à former un grain complémentaire de ladite texture sur une face externe de la coque,
• l'application d'une couche d'accroche (30) sur la coque,
• l'application d'un revêtement (40) sur la couche d'accroche (30).

## Description

### DOMAINE DE L'INVENTION

La présente invention concerne un procédé de fabrication d'un dispositif de commande, et un dispositif de commande pour véhicule utilitaire.

### ETAT DE LA TECHNIQUE

Pour commander un véhicule utilitaire ou un engin de chantier, par exemple une pelleteuse ou une chargeuse, on utilise des dispositifs de commande sous forme d'un manche mobile. Ces dispositifs comprennent généralement au moins un élément de commande, par exemple un bouton-poussoir, une molette ou un levier, permettant de commander une fonction du véhicule ou d'un outil de travail adaptable au véhicule.

Les dispositifs de commande doivent résister à des environnements sévères, par exemple des variations de température pouvant aller de -40 à 85°C et plus, du brouillard salin, des produits chimiques tels que des hydrocarbures, et également à des substances souvent présentes sur les mains d'un opérateur comme la sueur, le gel hydroalcoolique, la crème ou le café. De plus, une bonne préhension du dispositif de commande est nécessaire afin d'assurer une prise en main sûre et confortable.

Pour répondre à ces contraintes, les dispositifs connus comportent typiquement un revêtement en un élastomère comme le polyuréthane, un élastomère thermoplastique (TPE) ou le nitrile. L'utilisation des élastomères permet d'augmenter le frottement entre le manche mobile et la main d'un utilisateur avec ou sans gants, et ainsi d'augmenter l'adhérence du dispositif de commande.

Les dispositifs de commande présentent une forme ergonomique, avec des courbes et des surfaces adaptées à la main de l'utilisateur. Cela permet d'assurer une prise en main confortable pendant de longues périodes de travail, tout en offrant un meilleur contrôle. Certains modèles incluent des zones de forme adaptée pour les doigts et le pouce pour améliorer encore plus la précision des mouvements.

Certains dispositifs de commande présentent une surface texturée, avec des rainures ou des motifs en relief sur la surface, pour augmenter la friction et éviter que la main de l'opérateur ne glisse, même dans des conditions humides ou sales.

De manière connue, un procédé de surmoulage ou par bi-injection est utilisé pour fabriquer le manche de tels dispositifs de commande. Un tel procédé de fabrication comprend l'injection d'un élastomère sur une base de produit afin d'établir une liaison permanente et durable. Dans le cas d'un surmoulage dans un deuxième moule, la surface de la base de produit est typiquement nettoyée et/ou chauffée dans une étuve pour améliorer l'adhésion de l'élastomère sur ladite surface. La bi-injection dans un moule unique permet de travailler dans des conditions de température contrôlée et en évitant toute pollution, cependant ce procédé nécessite des moules et des machines d'injection très spécifiques et très coûteuses.

Cependant, le procédé de surmoulage par bi-injection présente un certain nombre d'inconvénients.

L'adhérence entre le matériau de la base de produit, typiquement une matière plastique rigide, et le matériau surmoulé élastomère est difficile à contrôler et des décollements de l'élastomère peuvent se produire. Cela engendre des problèmes de préhension et d'inconfort pour l'utilisateur du dispositif de commande. L'adhérence dépend notamment de la compatibilité chimique des matériaux de la base de produit et du matériau surmoulé. En cas d'incompatibilité, un délaminage ou des défauts mécaniques dans la pièce finale peuvent également se produire.

Dans le cas d'un décollement ou d'un arrachement entre le matériau injecté et la base de produit, l'utilisation du dispositif de commande devient très difficile. Ce phénomène peut entrainer des risques importants lors de l'utilisation, notamment dans les véhicules de chantier lourds.

Par ailleurs, les matériaux de la base de produit et de la portion injectée présentent souvent des coefficients de dilatation thermique différents. En cas ce variations de température, notamment pendant le refroidissement après le surmoulage, cette différence provoque des tensions mécaniques à l'intérieur de la pièce, pouvant entrainer des déformations, fissures et/ou problèmes d'alignement des différents éléments du dispositif de commande.

Le surmoulage nécessite par ailleurs un très bon contrôle de la température d'injection afin d'éviter des déformations ou dégradations du matériau rigide de la base de produit pendant l'injection du matériau élastomère.

Finalement, les moules utilisés pour le surmoulage sont très complexes et nécessitent des systèmes de fermeture étanches pour éviter les bavures et garantir un bon alignement entre le matériau de base et celui du surmoulage. Par exemple, dans le cas de dispositifs de commande formés de deux demi-coques surmoulées, les bavures au niveau de la ligne de fermeture sont souvent gênantes pour l'utilisateur et perçues comme indication de mauvaise qualité.

En conclusion, la fabrication d'un dispositif de commande par surmoulage est un procédé en plusieurs étapes, nécessitant des outillages complexes avec un coût de fabrication élevé, et des contrôles exigeants pour assurer la qualité de l'adhérence et de la finition de chaque pièce. Les éventuels rebuts et/ou la nécessité de retravailler des pièces après moulage augmentent davantage le coût de fabrication.

### EXPOSE DE L'INVENTION

Un but de l'invention est de mettre à disposition un procédé de fabrication d'un dispositif de commande facile à mettre en œuvre, permettant de fabriquer un dispositif de commande robuste, fiable et facile à manipuler.

A cet effet, l'invention propose un procédé de fabrication d'un dispositif de commande comprenant un manche de préhension, ledit procédé comprenant
- la fabrication d'une coque rigide définissant une partie du manche par injection d'une matière plastique dans un moule formant une empreinte, ladite empreinte présentant une texture en creux et/ou en relief sur au moins une partie d'une face interne, de sorte à former un grain complémentaire de ladite texture sur une face externe de la coque,
- l'application d'une couche d'accroche sur la coque,
- l'application d'un revêtement sur la couche d'accroche.

Selon d'autres caractéristiques avantageuses mais optionnelles dudit procédé, prises séparément ou en combinaison :
- l'application de la couche d'accroche est réalisée par pulvérisation ou trempage ;
- l'application du revêtement est réalisée par pulvérisation ou trempage ;
- la matière plastique est un thermoplastique, de préférence du polyamide renforcé ou de l'acrylonitrile butadiène styrène/polycarbonate renforcé ;
- le procédé comprend en outre, avant la fabrication de la coque, la mise en place d'un pavé dans le moule, ledit pavé présentant une seconde texture en creux et/ou en relief permettant de réaliser un second grain sur une partie de la surface de la coque ;
- le procédé comprend en outre l'assemblage d'au moins deux coques pour former le manche de préhension et le montage d'au moins un élément de commande dans une cavité formée par lesdites coques.

Un autre objet de l'invention concerne un dispositif de commande pour véhicule ou engin, ledit dispositif comprenant :
- une coque en plastique rigide présentant un grain sur moins une partie d'une face externe,
- une couche d'accroche disposée sur la face externe de la coque,
- une couche de revêtement disposée sur la couche d'accroche, et
- au moins un élément de commande agencé dans la coque.

Selon d'autres caractéristiques avantageuses mais optionnelles dudit dispositif, prises séparément ou en combinaison :
- le revêtement comprend du polyuréthanne ;
- l'épaisseur du revêtement est comprise entre 30 à 60 µm, de préférence de 50µm ;
- l'épaisseur de la couche d'accroche est comprise entre 5 et 15 µm ;
- le revêtement présente un effet à toucher doux au moins dans une zone présentant un grain ;
- une première zone de la face externe de la coque, destinée à recevoir une paume d'une main et/ou au moins un doigt d'un utilisateur, présente un grain ;
- la face externe de la coque comprend au moins deux zones présentant deux grains différents.

### BREVE DESCRIPTION DES FIGURES

D'autres caractéristiques et avantages de l'invention ressortiront de la description détaillée qui va suivre, en référence aux dessins annexés, sur lesquels :
La figure 1 montre un dispositif de commande selon l'invention
Les figures 2A, 2B, 2C et 2D montrent des exemples de grains.
Les figures 3A, 3B et 3C montrent des exemples de coques présentant des grains.
La figure 4 montre un moule pour former une coque.
La figure 5 illustre une face structurée d'une coque.
La figure 6 illustre la face structurée de la figure 5 avec une couche d'accroche.
La figure 7 illustre un empilement de couches sur la face structurée d'une coque de la figure 5.

Pour des raisons de lisibilité des figures, les éléments illustrés ne sont pas nécessairement représentés à l'échelle.

### DESCRIPTION DETAILLEE DE MODES DE REALISATION

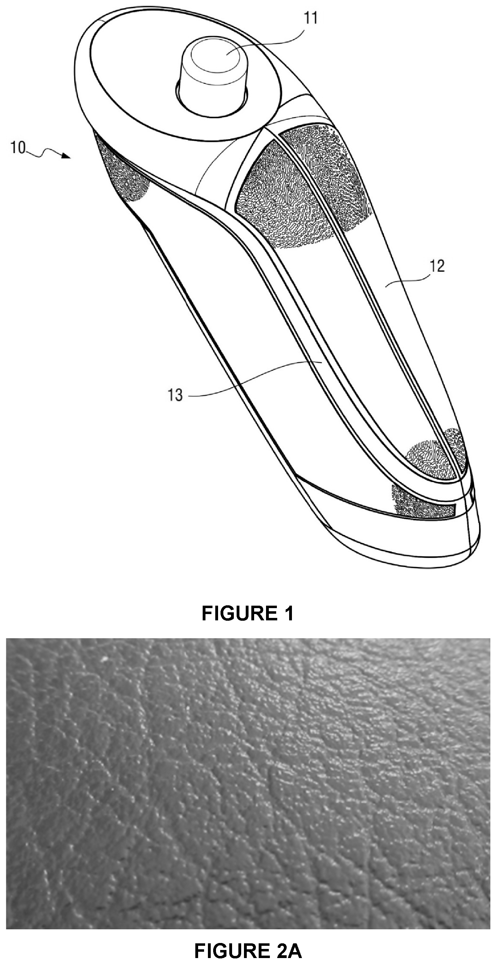

La figure 1 illustre un dispositif de commande pour véhicules utilitaires selon l'invention. Un dispositif de commande comprend une coque en plastique rigide 10 formant au moins une partie d'un manche conformée pour être saisie par un opérateur. La coque est typiquement en un thermoplastique, par exemple en polyamide ou en l'acrylonitrile butadiène styrène/polycarbonate. De préférence, le matériau thermoplastique est renforcé avec des fibres de verre, du carbone ou des fibres minérales afin de conférer une rigidité et une stabilité mécanique adaptées au manche.

Un ou plusieurs éléments de commande 11 sont disposés dans la coque et peuvent être actionnés par la main d'un utilisateur saisissant le manche. Par exemple, ces éléments de commande peuvent être des boutons-poussoirs, des molettes rotatives, des leviers ou des interrupteurs à bascule, disposés dans des zones facilement accessibles aux doigts de l'utilisateur pendant la manipulation du manche.

La coque peut être en une seule pièce ou être composée de plusieurs éléments assemblés. La coque est typiquement creuse pour loger des câbles connectés à au moins un élément de commande. Sur son extérieur, la coque présente une forme ergonomique adaptée pour favoriser une bonne prise en main de la part de l'opérateur. Sur au moins une partie 12 de sa surface extérieure, la coque présente un grain facilitant la préhension du manche et augmenter le frottement entre la main et le manche, afin d'éviter que la main de l'opérateur ne glisse pendant l'utilisation du dispositif de commande.

Pour des raisons de représentation graphique, le grain est illustré uniquement sur une partie de la zone 12 dans les figures. Toutefois, le grain est réparti de manière continue sur la totalité de chaque zone 12. Naturellement, la taille et la forme des zones peuvent varier selon la forme et les fonctionnalités du dispositif de commande.

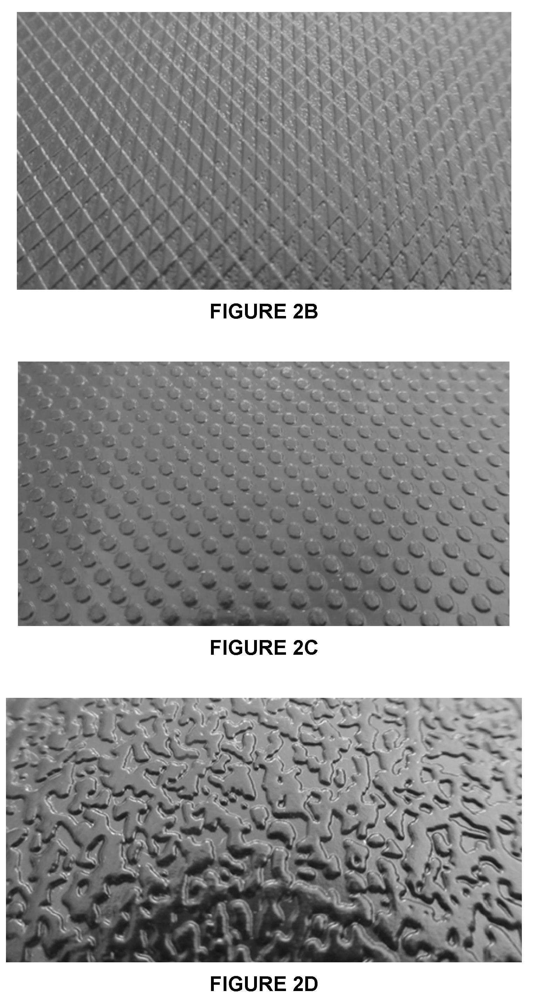

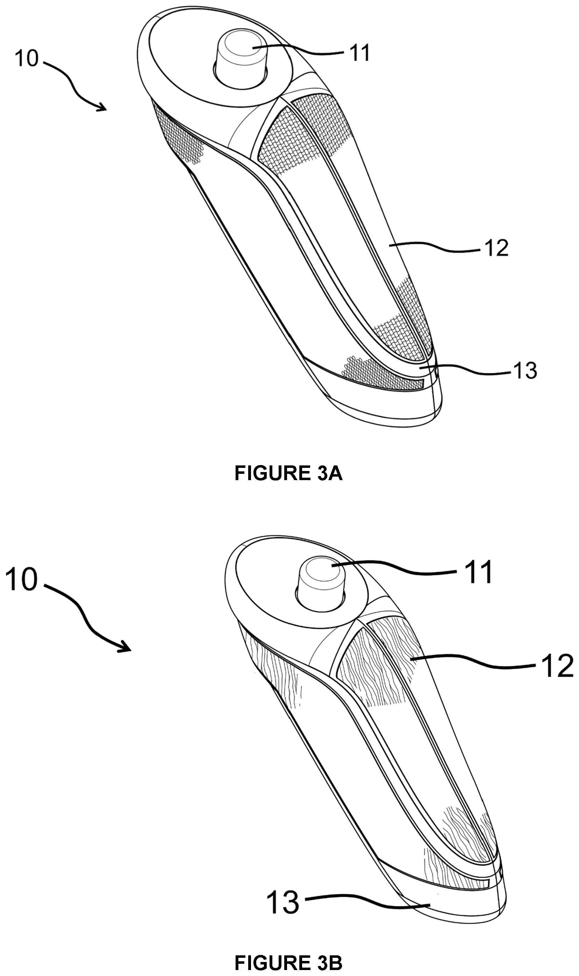

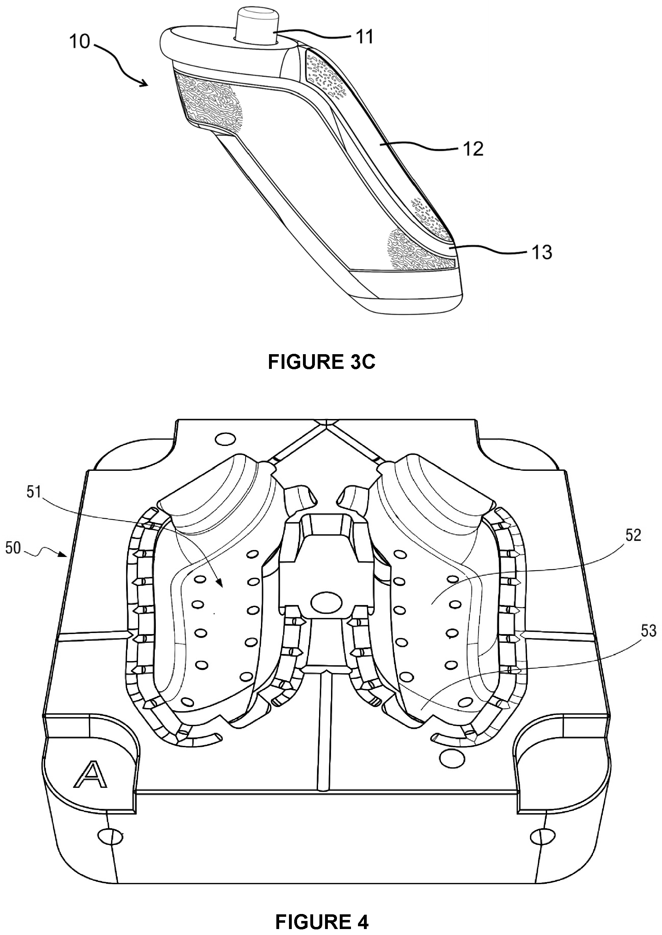

Le grain est une texture régulière ou irrégulière de la surface en plastique et peut comprendre la présence de motifs très variés en relief et/ou en creux par rapport à une géométrie de base de la surface de la coque. Typiquement, la texture du grain présente une hauteur ou profondeur comprise entre 0,1 et 1 mm. Des exemples de grains sont illustrés aux figures 2A à 2D. Des coques présentent d'autres grains sont représentés aux figures 3A à 3C. Par exemple, en référence à la figure 2A, le grain peut présenter un motif de peau. Dans d'autres exemples, le grain peut comprendre des saillies rondes, comme illustré à la figure 2B, un motif géométrique comme illustré à la figure 2C, des saillies anguleuses ou des structures inspirées de surfaces d'autres matériaux, par exemple un relief imitant une structure tissée comme illustré à la figure 3A, une surface en bois comme illustré à la figure 3B, ou un motif irrégulier comme illustré aux figures 2D et 3C. Le grain peut présenter un motif régulier, formé par la répétition d'un même motif de base, ou irrégulier.

La face externe de la coque peut présenter un grain sur la totalité de son étendue. De manière alternative, la coque présente des zones lisses 13 et uniquement une partie de sa face externe 12 présente un grain. Dans ce cas, le grain est de préférence disposé dans une zone dans laquelle une bonne préhension est souhaitée, typiquement une zone dans laquelle l'utilisateur peut poser la paume de la main ou un ou plusieurs doigts.

Dans certains modes de réalisation, plusieurs zones distinctes de la face externe de la coque présentent des grains identiques ou différents. Des grains différents peuvent par exemple présenter des reliefs de différentes hauteurs afin de favoriser la préhension dans certaines zones à haut relief, et conférer un toucher plus agréable dans des zones présentant un relief à une hauteur réduite.

Toutes les zones nécessitant une bonne accroche de la main d'utilisateur présentent de préférence un grain, permettant d'augmenter le frottement entre la main et la zone respective du manche. Les zones dépourvues d'un grain sont par exemple agencées autour d'un élément de commande ou le long d'un bord présent sur le manche et peuvent permettre d'éviter un salissement trop rapide desdites zones.

La coque en plastique est recouverte d'une couche d'accroche et d'une couche de revêtement. L'ensemble de la couche d'accroche et de la couche de revêtement est appliqué de sorte à ne pas combler entièrement les creux formés par le grain. En d'autres termes, le grain reste visible et perceptible au toucher après application de la couche de revêtement.

La couche d'accroche est agencée directement sur la face externe de la coque et favorise l'accroche de la couche de revêtement sur la coque en plastique. La couche d'accroche présente une épaisseur comprise entre 5 et 15 µm. Cette épaisseur permet de conserver la structure du grain sur la face externe de la coque, tout en rendant la couche d'accroche suffisamment homogène et continue afin d'optimiser l'adhérence de la couche de revêtement sur la coque en plastique.

Le revêtement est typiquement un produit à base de polyuréthanne et présente une épaisseur comprise entre 30 et 60 µm. Une telle épaisseur permet d'assurer une couche de revêtement homogène et de conserver la structure du grain sur la face externe du revêtement.

Le polyuréthanne est un matériau résistant et élastique, permettant de réaliser une surface externe avec un aspect mat et un toucher agréable du type « toucher doux » ou « soft-touch » en anglais. Typiquement, on utilise une couleur noire ou un revêtement transparent sur un plastique noir, ce qui rend le manche plus robuste contre les salissures par les produits fréquemment présents dans un environnement de chantier. Dans d'autres modes de réalisation, un revêtement coloré peut être utilisé pour une meilleure visibilité du dispositif de commande.

Le revêtement permet en outre de recouvrir d'éventuels défauts visuels pouvant se produire lors du moulage de la coque en plastique, par exemple des givrages, des brulures, des lignes d'écoulement, des lignes de soudure ou des brillances.

Nous allons maintenant décrire un procédé de fabrication d'un dispositif de commande selon l'invention.

En référence à la figure 4, la fabrication du dispositif de commande nécessite un moule d'injection 50 formant une empreinte 51 pour la coque en plastique à réaliser. Au moins certaines zones 52 de l'empreinte 51 sont structurées en relief et/ou en creux afin de former un grain complémentaire à la structure en relief et/ou en creux dans la coque en plastique à réaliser. Pour la lisibilité de la figure, le grain n'a pas été représenté. Optionnellement, une ou plusieurs zones 53 de l'empreinte sont lisses, sans présenter une structure en relief et/ou en creux. Dans certains cas, on réalise différentes structures dans plusieurs zones du moule. Il est également possible de réaliser un moule provisoire non-structuré et d'intégrer un pavé portant une structure en relief et/ou en creux dans ledit moule afin d'obtenir l'empreinte pour le grain au niveau du pavé intégré.

L'utilisation d'un pavé spécifique pour une portion texturée permet de modifier facilement la texturation par un échange du pavé, et ainsi réaliser des dispositifs de commande présentant des grains différents par un moule commun, avec des pavés adaptés pour chaque grain souhaité.

La structure en relief et/ou en creux est typiquement réalisée par attaque chimique ou par gravure laser. Une texturation par attaque chimique permet de réaliser des grains irréguliers et aléatoires, présentant souvent un aspect naturel et une bonne préhension de la main. La texturation par un laser permet la réalisation d'un grand nombre de textures différentes, notamment des grains réguliers, géométriques, et imitant tout type de surface.

La hauteur du relief est comprise entre 0,1 et 1 mm, ce qui permet d'assurer une structure favorisant une bonne préhension du manche, en limitant les risques de défauts et de retassures lors du moulage par injection.

Le grain dans le moule peut être adapté en fonction du grain souhaité pour le manche de préhension à fabriquer. Par exemple, le grain du moule peut être plus gros que le grain souhaité sur le manche de préhension afin de prendre en compte les épaisseurs de la couche d'accroche et du revêtement et un éventuel remplissage de certaines structures par les produits utilisés pour lesdites couches.

La coque peut être réalisée en une seule pièce. Pour la fabrication des manches plus complexes, la coque peut être réalisée en plusieurs parties moulées qui sont ensuite assemblées, par exemple deux demi-coques et/ou une ou plusieurs parties destinées à loger des éléments de commande. Cette méthode permet d'intégrer des mécanismes internes ou des formes plus élaborées.

Chaque moule est assemblé dans une presse d'injection. Typiquement, l'assemblage comprend au moins l'assemblage de deux parties formant chacune une empreinte d'une coque ou d'une partie de la coque (par exemple une demi-coque) du dispositif de commande. Dans certains cas, l'assemblage comprend l'insertion d'un ou plusieurs pavés comportant une structure en relief ou en creux pour former une zone présentant un grain.

La coque ou partie de coque en plastique est réalisée par injection d'un matériau thermoplastique dans le moule. Typiquement, le matériau thermoplastique est injecté dans le moule avec des fibres de renforcement en verre, des fibres minérales ou des fibres de carbone.

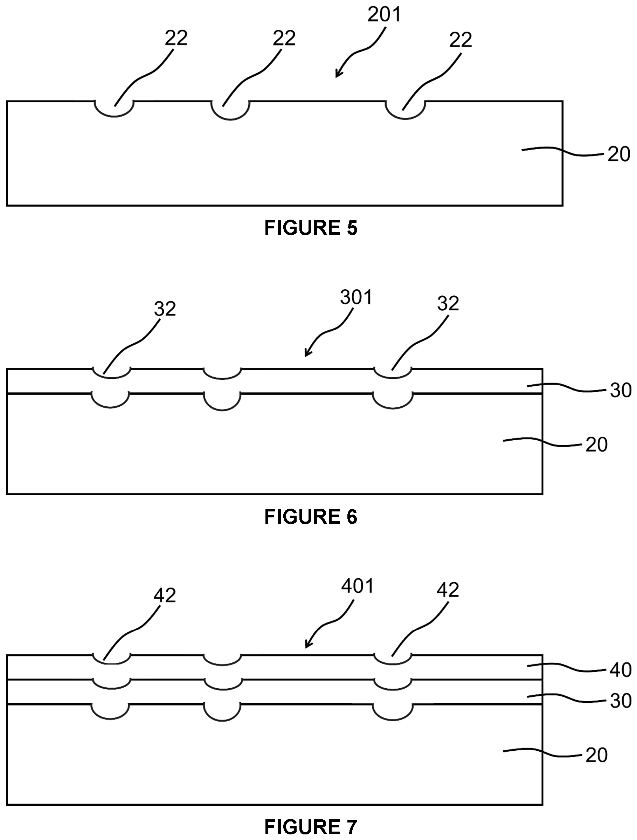

Après un refroidissement et le démoulage de la coque, on procède à l'application de la couche d'accroche. La couche d'accroche est typiquement appliquée par pulvérisation d'un précurseur de la couche d'accroche sur la face externe de la coque. La pulvérisation permet de réaliser une couche de l'épaisseur comprise entre 5 et 15 µm de manière régulière sur la face externe entière de la coque. La figure 5 illustre schématiquement un grain sous forme de creux 22 dans une surface 201 d'une coque 20. Comme illustré à la figure 6, le grain de la face externe est conservé sur la face externe 301 de la couche d'accroche 30. Les creux 32 dans la structure du grain ne sont donc pas entièrement remplis par le matériau de la couche d'accroche 30.

Le précurseur est typiquement un primaire d'adhérence mélangé avec un durcisseur. Après l'application, le solvant présent dans le mélange est évaporé, par exemple pendant environ 5 à 10 minutes à température ambiante, c'est-à-dire à environ 20°C. Dans une seconde étape, la couche d'accroche est durcie, par exemple par une réaction chimique entre le primaire d'adhérence et le durcisseur à 70°C pendant 30 min. Un séchage ultérieur permettant l'évaporation des résidus du solvant peut être nécessaire.

Par la suite, en référence à la figure 7, le revêtement 40 est appliqué sur la couche d'accroche 30 finalisée. De manière illustrative et non limitative, un précurseur sous forme d'une dispersion ou une suspension de polyuréthanne est appliqué par pulvérisation.

Comme illustré à la figure 7, le grain de la face externe est conservé sur la face externe 401 du revêtement 40. Les creux 42 dans la structure du grain ne sont donc pas entièrement remplis par le matériau du revêtement 40.

Après l'application du revêtement, le solvant présent dans la dispersion ou la suspension est évaporé, par exemple pendant environ 10 minutes à température ambiante. Dans une seconde étape, on peut procéder à un traitement thermique, par exemple de 70°C pendant 60 min. Un séchage ultérieur permettant l'évaporation d'éventuels résidus de solvant peut être nécessaire.

Dans le cas d'une coque composée de plusieurs pièces, l'application de la couche d'accroche et du revêtement sont de préférence réalisées sur chaque pièce avant l'assemblage de la coque.

Afin de proposer une large gamme de dispositifs de commande sans nécessité de fabriquer des moules d'injection supplémentaires, on peut également prévoir d'utiliser d'autres pièces fabriquées dans le même moule pour utilisation sans revêtement.

Après l'application du revêtement, un ou plusieurs éléments de commande peuvent être intégrés dans la coque en plastique. Ces éléments sont typiquement connectés électriquement à des câbles passant par un creux à l'intérieur du manche et peuvent être connectés à un véhicule utilitaire ou un engin de chantier à piloter.

## Revendications

1. Procédé de fabrication d'un dispositif de commande comprenant un manche de préhension, ledit procédé comprenant
• la fabrication d'une coque rigide (10, 20) définissant une partie du manche par injection d'une matière plastique dans un moule (50) formant une empreinte (51), ladite empreinte présentant une texture en creux et/ou en relief sur au moins une partie (52) d'une face interne, de sorte à former un grain complémentaire de ladite texture sur une face externe de la coque,
• l'application d'une couche d'accroche (30) sur la coque,
• l'application d'un revêtement (40) sur la couche d'accroche (30).

2. Procédé selon la revendication 1, dans lequel l'application de la couche d'accroche (30) est réalisée par pulvérisation ou trempage.

3. Procédé selon la revendication 1 ou la revendication 2, dans lequel l'application du revêtement (40) est réalisée par pulvérisation ou trempage.

4. Procédé selon l'une quelconque des revendications précédentes, dans lequel la matière plastique est un thermoplastique, de préférence du polyamide renforcé ou de l'acrylonitrile butadiène styrène/polycarbonate renforcé.

5. Procédé selon l'une quelconque des revendications précédentes, comprenant en outre, avant la fabrication de la coque (10, 20), la mise en place d'un pavé dans le moule (50), ledit pavé présentant une seconde texture en creux et/ou en relief permettant de réaliser un second grain sur une partie de la surface de la coque.

6. Procédé selon l'une quelconque des revendications précédentes, comprenant en outre l'assemblage d'au moins deux coques pour former le manche de préhension et le montage d'au moins un élément de commande dans une cavité formée par lesdites coques.

7. Dispositif de commande pour véhicule ou engin, ledit dispositif comprenant
• une coque (10, 20) en plastique rigide présentant un grain sur moins une partie d'une face externe,
• une couche d'accroche (30) disposée sur la face externe de la coque,
• une couche de revêtement (40) disposée sur la couche d'accroche (30), et
• au moins un élément de commande (11) agencé dans la coque (10, 20).

8. Dispositif de commande selon la revendication 7, dans lequel le revêtement (40) comprend du polyuréthanne.

9. Dispositif de commande selon l'une des revendications 7 ou 8, dans lequel l'épaisseur du revêtement (40) est comprise entre 30 à 60 µm, de préférence de 50µm.

10. Dispositif de commande selon l'une quelconque des revendications 7 à 9, dans lequel l'épaisseur de la couche d'accroche (30) est comprise entre 5 et 15 µm.

11. Dispositif de commande selon l'une quelconque des revendications 7 à 10, dans lequel le revêtement (40) présente un effet à toucher doux au moins dans une zone (12) présentant un grain.

12. Dispositif de commande selon l'une quelconque des revendications 7 à **11,** dans lequel une première zone (12) de la face externe de la coque, destinée à recevoir une paume d'une main et/ou au moins un doigt d'un utilisateur, présente un grain.

13. Dispositif de commande selon l'une quelconque des revendications 7 à 12, dans lequel la face externe (401) de la coque comprend au moins deux zones présentant deux grains différents.
